# EUROPÄISCHE PATENTSCHRIFT

(11) **EP 3 520 200 B1**
(45) Veröffentlichungstag und Bekanntmachung des Hinweises auf die Patenterteilung: **17.07.2024**
(21) Anmeldenummer: 17761260.3
(22) Anmeldetag: 04.09.2017
(51) Int. Cl.: H02K 1/276

(54) **ELEKTRISCHER ANTRIEBSMOTOR**
ELECTRIC DRIVE MOTOR
MOTEUR D'ENTRAÎNEMENT ÉLECTRIQUE

(30) Priorität: 27.09.2016 DE 102016218540
(43) Veröffentlichungstag der Anmeldung: 07.08.2019
(73) Patentinhaber: BSH Hausgeräte GmbH, 81739 München (DE)
(72) Erfinder: BÖTTGER, Torsten, 01445 Radebeul (DE); FARKAS, Viliam, 07101 Michalovce (SK); KALAVSKY, Michal, 04023 Kosice (SK); WALTER, Axel, 14621 Schönwalde-Glien (DE)
(86) Internationale Anmeldenummer: PCT/EP2017/072067
(87) Internationale Veröffentlichungsnummer: WO 2018/059877

(56) Entgegenhaltungen:
- EP-A2- 2 618 462
- EP-A2- 2 808 980
- CN-A- 105 811 615
- DE-A1- 102008 044 127
- DE-A1- 102009 003 228
- DE-A1- 102013 226 379

## Beschreibung

Die Erfindung betrifft einen elektrischen Antriebsmotor, aufweisend einen Stator mit Polschuhen und wenigstens einer elektrisch ansteuerbaren Statorwicklung, und einen im Feld der Statorwicklung unter Belassen eines Ringspaltes drehantreibbar gelagerten Permanentmagnetenrotor, der eine Motorwelle und ein auf der Motorwelle sitzendes Blechpaket aufweist, das zumindest eine der Anzahl von Polen des Permanentmagnetenrotors entsprechende Anzahl von Taschen aufweist, in denen jeweils einer der Permanentmagnete eingesetzt ist. Die Erfindung betrifft außerdem ein Haushaltsgerät mit einem solchen elektrischen Antriebsmotor.

Die WO 03/081748 A1 beschreibt einen mehrphasigen Innenläufermotor mit einem genuteten Stator, einen vom Stator durch einen Luftspalt getrennten Rotor, welcher ein Blechpaket mit einer Mehrzahl von ausgeprägten Polen aufweist, die zwischen sich Pollücken definieren, wobei im Blechpaket des Rotors Taschen ausgebildet sind, welche jeweils zwischen zwei ihnen benachbarten Pollücken des Rotors verlaufen. In diesen Taschen sind Permanentmagnete angeordnet, welche im Wesentlichen radial magnetisiert sind und von denen jeder zwei pollückenseitige Enden aufweist, die den ihm benachbarten Pollücken des Rotors zugewandt sind.

Die DE 10 2013 226 379 A1 beschreibt einen Speichenrotor für eine elektrische Maschine, mit einem Grundkörper, der sich konzentrisch um eine Drehachse erstreckt, und der eine Vielzahl an Polschuhen aufweist, zwischen denen Dauermagnete in Aufnahmen angeordnet sind, wobei für jeden Dauermagneten in seiner Aufnahme jeweils zumindest ein erstes Klemmelement und ein zweites Klemmelement vorgesehen sind, die ihn in seiner Aufnahme fixieren, wobei das erste Klemmelement den Dauermagneten in einer radialen Richtung zur Drehachse, und das zweite Klemmelement ihn in einer tangentialen Richtung zur Drehachse fixiert, und für jedes zweite Klemmelement jeweils zudem ein Bewegungsfreiraum vorgesehen ist.

Die DE 10 2009 003 228 A1 beschreibt eine elektrische Maschine mit einem Rotor und einer Welle, wobei der Rotor mehrere Lamellen aufweist, wobei die Lamellen einzeln oder als Lamellenpaket oder mittels mehrerer Lamellenpakete vormontiert auf die Welle gefügt sind und wobei die Lamellen und/oder die Lamellenpakete mit der Welle verbunden sind, und je Lamellenpaket an zumindest einer Lamelle ein Klemmnäschen ausgebildet ist, das zur Befestigung des Lamellenpakets an der Welle dient, und an der Lamelle und/oder an zumindest einer weiteren Lamelle ein Zentriernäschen ausgebildet ist, das zur zumindest im Wesentlichen radialen Zentrierung des Lamellenpakets relativ zu der Welle dient, oder, wenn der Rotor aus mehreren einzelnen Lamellen aufgebaut ist, besitzt jede einzelne Lamelle mindestens ein federndes Klemmnäschen und zumindest zwei Zentriernäschen.

Die EP 2 618 462 A2 beschreibt eine elektrische Maschine mit einem Speichenrotor.

Die Aufgabe der Erfindung ist es, einen elektrischen Antriebsmotor, insbesondere einen bürstenlosen Gleichstrommotor zu schaffen, dessen Permanentmagnetenrotor verbessert ist.

Die Aufgabe der Erfindung wird gelöst durch einen elektrischen Antriebsmotor nach Anspruch 1.

Der elektrische Antriebsmotor kann insbesondere einen feststehenden Außenstator und einen drehbar gelagerten Innenrotor aufweisen. Der Permanentmagnetenrotor weist mehrere Pole, insbesondere vier, sechs, acht oder mehr Pole auf. Jedem Permanentmagnet des Permanentmagnetenrotors ist eine Tasche im Blechpaket zugeordnet. In jeweils eine dieser Tasche wird ein einzelner Permanentmagnet eingesetzt und darin insbesondere gegen Verrutschen fixiert. Üblicherweise sind alle Permanentmagnete des Permanentmagnetrotors identisch ausgebildet. Jeder Permanentmagnet kann eine quaderförmige Gestalt aufweisen. Dabei können die beiden gegenüberliegenden größten Begrenzungsflächen des Permanentmagnets in Umfangsrichtung ausgerichtet sein, wobei seitliche kleinere Begrenzungsflächen die Pole der Magneten bilden. Die Permanentmagnete sind über den Umfang des Permanentmagnetenrotors gleichmäßig verteilt angeordnet.

Jede Tasche kann eine der Gestalt der Permanentmagnete entsprechende Form aufweisen, wobei die Tasche geringfügig größer ausgebildet ist, so dass jeweils ein einzelner Permanentmagnet in eine Tasche eingefügt werden kann. Das Blechpaket des Permanentmagnetenrotors wird von mehreren, insbesondere gestanzten Blechzuschnitten gebildet, welche deckungsgleich übereinander gestapelt und zu einem kompakten Paket miteinander verbunden sind. Das Blechpaket kann insoweit durch Stanzpacketierung hergestellt sein. Die deckungsgleich übereinander gestapelten Bleche können beispielsweise durch Schweißen, Nieten, Klammern oder eben Stanz- bzw. Klebepacketierung verbunden sein.

Die Permanentmagnete können beispielsweise eine großflächige, im Wesentlichen rechteckige in Umfangsrichtung in Drehrichtung weisende vordere Begrenzungsfläche aufweisen und eine gegenüberliegende gleichgroße, im Wesentlichen rechteckige in Umfangsrichtung entgegen der Drehrichtung weisende hintere Begrenzungsfläche aufweisen. Eine innere schmale Begrenzungsfläche weist auf die Roboterwelle zu und eine gegenüberliegende äußere schmale Begrenzungsfläche bildet einen magnetischen Pol des Rotors. Alle Kanten des quaderförmigen Permanentmagnets können mit einer Fase versehen sein bzw. abgerundet ausgebildet sein.

Die Federvorrichtung kann prinzipiell aus einem Teil gebildet werden, aber auch aus mehreren Teilen gebildet werden. Die Federvorrichtung spannt jeden einzelnen Permanentmagnet innerhalb seiner jeweiligen Tasche in eine radial möglichst weit außen liegende Position. Dabei weist der Permanentmagnetenrotor an jeder Tasche einen radial möglichst weit außen liegenden Anschlag auf, gegen den der jeweilige in seiner Tasche eingesetzte Permanentmagnet durch die Federvorrichtung gedrückt wird. Alle Anschläge liegen vorzugsweise auf demselben Durchmesser oder Radius, so dass sämtliche Permanentmagnete durch die Federvorrichtung auf denselben äußeren Durchmesser bzw. Radius positioniert werden. So kann sichergestellt werden, dass alle Permanentmagnete, d.h. alle Pole des Permanentmagnetenrotors dieselbe magnetische Wirkung im Ringspalt des Antriebsmotors erzeugen.

Erfindungsgemäß dient die Federvorrichtung bzw. dienen die Zungen dazu, die in die Taschen eingesetzten Permanentmagnete während der Fertigung und/oder der Montage des Permanentmagnetenrotors vorübergehend zu fixieren, bis die in die Taschen eingesetzten Permanentmagneten durch ein Umspritzen des Blechpakets mit Kunststoff durch den eingespritzten Kunststoff endgültig in ihren Positionen fixiert werden. Eine solche nur vorübergehende Fixierung der in die Taschen eingesetzten Permanentmagnete durch die Federvorrichtung bzw. durch die Zungen verhindert, dass die Permanentmagnete in den Taschen verschoben werden oder sogar ganz herausfallen, wenn der Permanentmagnetenrotor, insbesondere das Blechpaket während der Fertigung gehandhabt oder bewegt wird oder vor dem Umspritzen mit Kunststoff vorerwärmt wird, bevor der noch nicht umspritzte Permanentmagnetenrotor in die Spritzgießform eingesetzt wird. Auch kann die Federvorrichtung verhindern bzw. können die Zungen verhindern, dass die in die Taschen eingesetzten Permanentmagnete während des Umspritzvorgangs durch den flüssigen Kunststoffstrom verschoben werden. Die federvorspannende Wirkung der Federvorrichtung bzw. der Zungen kann also gegebenenfalls nach einem Umspritzen mit Kunststoff wegfallen, da die federvorspannende Wirkung in diesen Fällen gegebenenfalls nicht mehr benötigt wird.

Die Federvorrichtung kann von jeweils ein oder mehreren, in jeweils eine der Taschen hineinragenden elastischen Zungen gebildet werden, wobei jede Zunge einen Zungengrundabschnitt aufweist, der motorwellennahe an dem Blechpaket festgelegt ist, ein Zungenspitzenabschnitt in radialer Richtung von der Motorwelle wegweisend in die Tasche hineinragt und jede Tasche motorwellenfern eine Anschlagvorrichtung aufweist, die an dem Blechpaket festgelegt ist und gegen die der jeweils in eine der Taschen eingesetzte Permanentmagnet durch die ein oder mehreren Zungen der betreffenden Tasche federvorgespannt angedrückt wird.

Die Zungen können sich somit zumindest im Wesentlichen ausgehend von den motorwellennahen Begrenzungsflächen der Taschen radial in Richtung radial nach außen erstrecken. Anders ausgedrückt ragen die Zungen ausgehend von den motorwellennahen Begrenzungsflächen der Taschen radial in die Taschen hinein. Wenn die Permanentmagnete noch nicht in die Taschen eingesetzt sind, sind die Zungen entspannt, d.h. es ist noch keine Federkraft in ihnen gespeichert. Werden nun die Permanentmagnete in axialer Richtung, d.h. in einer parallelen Richtung zur Motorwelle, in die Taschen eingeschoben oder eingesteckt, dann drücken die Permanentmagnete die Zungen zur Seite, d.h. die Zungen biegen sich, um den Permanentmagneten auszuweichen und eine Federkraft wird in den Zungen gespeichert. Sind die Permanentmagnete vollständig in die Taschen eingeschoben oder eingesteckt, dann liegen die Zungenspitzenabschnitte der Zungen an den motorwellennahen schmalen Begrenzungsflächen der Permanentmagnete elastisch vorgespannt an und drücken somit die Permanentmagnete radial nach außen. In jeder Tasche können ein oder mehrere Zungen vorgesehen sein.

Die Anschlagsvorrichtung wird durch Anschlagskanten in den Taschen des Blechpaktes gebildet.

Das Blechpaket des Permanentmagnetenrotors wird aus einem Stapel von mehreren Einzelblechen gebildet, welche eine der Anzahl von Polen des Permanentmagnetenrotors entsprechende Anzahl von Fensterausschnitten aufweist, welche im gestapelten Zustand des Blechpaketes die Taschen bilden, in welchen die Permanentmagnete eingesetzt sind, wobei die Federvorrichtung, insbesondere die ein oder mehreren Zungen, durch nach innen vorspringende Randabschnitte der Fensterausschnitte der Einzelbleche des Blechpakets gebildet werden.

Die Fensterausschnitte weisen also jeweils einen inneren Randabschnitt auf, wobei die gestapelten Randabschnitte im gestapelten Zustand der Einzelbleche die Seitenwände der Taschen des Blechpaktes bilden. Die Fensterausschnitte weisen eine Kontur auf, die im Wesentlichen der Querschnittskontur der Permanentmagnete entspricht, insbesondere nur geringfügig größer ist, als die Querschnittskontur der Permanentmagnete, so dass die Permanentmagnete einerseits leichtgängig in die Taschen eingeschoben werden können, aber andererseits in den Taschen kein großes Spiel aufweisen. Die Federvorrichtung, insbesondere die ein oder mehreren Zungen sind in der Ausführungsform, in der die durch nach innen vorspringende Randabschnitte der Fensterausschnitte der Einzelbleche des Blechpakets gebildet werden, insoweit einteilig mit dem jeweiligen Einzelblech ausgebildet. Es können Einzelbleche vorgesehen sein, die keine Federvorrichtungen, insbesondere keine Zungen aufweisen und es können Einzelbleche vorgesehen sein, die Federvorrichtungen, insbesondere Zungen aufweisen. Ein Stapel von Blechpakete kann von Einzelblechen mit Zungen und von Einzelblechen ohne Zungen gebildet werden. Es können also Einzelbleche mit Zungen und Einzelbleche ohne Zungen abwechselnd gestapelt sein, wobei auch mehrere Einzelbleche ohne Zungen unmittelbar aufeinanderfolgend gestapelt sein können und sich an eine solche Gruppe ein oder prinzipiell auch mehrere Einzelbleche mit Zungen anschließen können. Im Allgemeinen können sich insbesondere mehrere Einzelbleche ohne Zungen mit einem einzigen Einzelbleche mit Zungen abwechseln.

Die ein oder mehreren Zungen können jeweils eine trapezförmige Kontur aufweisen, wobei der Zungengrundabschnitt durch die längere Basis der trapezförmigen Zunge gebildet wird und der Zungenspitzenabschnitt durch die kürzere Basis der trapezförmigen Zunge gebildet wird.

Aufgrund der Trapezform kann die Federsteifigkeit progressiv bzw. degressiv ausgebildet werden. Wenn der Zungengrundabschnitt durch die längere Basis der trapezförmigen Zunge gebildet wird und der Zungenspitzenabschnitt durch die kürzere Basis der trapezförmigen Zunge gebildet wird, nimmt die Federsteifigkeit in Richtung des Zungenspitzenabschnitts ab, so dass der Zungenspitzenabschnitt leichter umgebogen werden kann. Anderseits nimmt die Federsteifigkeit in Richtung des Zungengrundabschnitt zu, so dass mit zunehmender Biegung der Zungen die Federspannkraft, welche die Permanentmagnete innerhalb der Taschen in radialer Richtung nach außen vorspannt, zunimmt.

Die ein oder mehreren Zungen können jeweils eine rechteckige Kontur aufweisen. In einer solchen Ausführungsform bleibt die Federsteifigkeit über die gesamte Länge der Zungen konstant.

Der Stapel von Einzelblechen kann aus einer ersten Anzahl von Einzelblechen gebildet werden, welche die Zungen aufweisen und aus einer zweiten Anzahl von Einzelblechen gebildet werden, welche zungenlos ausgebildet sind, wobei die erste Anzahl von Einzelblechen und die zweite Anzahl von Einzelblechen zur Bildung des Stapels des Blechpakets in einer vorgegebenen, sich abwechselnden Gruppierung übereinanderliegend angeordnet sind.

Indem sich die erste Anzahl von Einzelblechen und die zweite Anzahl von Einzelblechen zur Bildung des Stapels des Blechpakets in einer vorgegebenen, sich abwechselnden Gruppierung übereinanderliegend angeordnet sind, sind schon allein durch das entsprechende Stapeln die einzelnen Zungen beabstandet voneinander angeordnet, so dass entsprechend ausreichend große Abstände zwischen jeweils zwei unmittelbar benachbarten Zungen vorhanden ist, um eine ausreichende Biegung der Zungen zu ermöglichen, sobald die einzelnen Permanentmagnete in die Taschen eingeschoben werden und die Zungen demgemäß von den Permanentmagneten zur Seite gedrückt werden.

Die zweite Anzahl von Einzelblechen kann um das achtfache bis zwölffache größer sein, als die erste Anzahl von Einzelblechen. Ein solches Verhältnis ist besonders zweckmäßig, um einerseits eine entsprechend ausreichend große Anzahl von Zungen je Tasche bereitzustellen, welche die benötigte Federkraft über die gesamte axiale Länge der Permanentmagnete aufbringen kann und um andererseits sicherzustellen, dass die Zungen ausreichend Platz zur Verfügung haben, um sich in gewünschter Weise elastisch umbiegen zu können.

Jede Tasche des Blechpakets weist motorwellenfern eine Anschlagvorrichtung auf, die von Anschlagskanten der Einzelbleche des Blechpakets gebildet werden, die durch nach innen vorspringende Nasen an den seitlichen Randabschnitten von Fensterausschnitten der Einzelbleche des Blechpakets gebildet werden, welche im gestapelten Zustand des Blechpakets die Taschen bilden.

Dabei kann der Permanentmagnetenrotor an jeder Tasche einen radial möglichst weit außen liegenden Anschlag aufweisen, gegen den der jeweilige in seiner Tasche eingesetzte Permanentmagnet durch die Federvorrichtung gedrückt wird. Alle Anschläge liegen vorzugsweise auf demselben Durchmesser oder Radius, so dass sämtliche Permanentmagnete durch die Federvorrichtung auf denselben äußeren Durchmesser bzw. Radius positioniert werden. So kann sichergestellt werden, dass alle Permanentmagnete, d.h. alle Pole des Permanentmagnetenrotors dieselbe magnetische Wirkung im Ringspalt des Antriebsmotors erzeugen. Wenn die Anschläge radial möglichst weit außen liegen, dann sind die Permanentmagnete aufgrund der Federvorspannung der Federvorrichtung, insbesondere der Zungen auch möglichst nahe an dem Ringspalt des Antriebsmotors positioniert.

Das Blechpaket des Permanentmagnetenrotors kann aus einem Stapel von mehreren Einzelblechen gebildet werden, welche eine der Anzahl von Polen des Permanentmagnetenrotors entsprechende Anzahl von Fensterausschnitten aufweist, welche im gestapelten Zustand des Blechpakets die Taschen bilden, wobei die Fensterausschnitte eine geschlossene Kontur aufweisen.

Wenn die Fensterausschnitte eine geschlossene Kontur aufweisen, dann wird insoweit ein geschlossenes Blechpaket gebildet, bei dem die radial außen liegenden Begrenzungswände der Permanentmagnete von dem Blechpaket umschlossen sind.

Das Blechpaket des Permanentmagnetenrotors kann aus einem Stapel von mehreren Einzelblechen gebildet werden, welche eine der Anzahl von Polen des Permanentmagnetenrotors entsprechende Anzahl von Fensterausschnitten aufweist, welche im gestapelten Zustand des Blechpakets die Taschen bilden, wobei die Fensterausschnitte eine am motorwellenfernen Randabschnitt randoffene Kontur aufweisen.

Wenn die Fensterausschnitte eine randoffene Kontur aufweisen, dann wird insoweit ein offenes Blechpaket gebildet, bei dem die radial außen liegenden Begrenzungswände der Permanentmagnete von dem Blechpaket nicht umschlossen sind, sondern in Richtung des Ringspaltes freiliegen. In einer solchen Ausführungsvariante können die Permanentmagnete gegebenenfalls noch näher an den Ringspalt positioniert werden, d.h. auf einem noch größeren Durchmesser oder Radius angeordnet werden. Gegebenenfalls können die Permanentmagnete trotz eines solchen offenen Blechpakets dennoch, insbesondere wie beschrieben, mit Kunststoff umspritzt sein.

Die in die Taschen des Blechpakets eingesetzten und von der Federvorrichtung, insbesondere von den elastischen Zungen, vorgespannt fixierten Permanentmagnete sind erfindungsgemäß in allen Ausführungsformen, wie beschrieben, durch Kunststoff umspritzt.

Die Aufgabe wird außerdem gelöst durch ein Haushaltsgerät, insbesondere eine Geschirrspülmaschine, eine Waschmaschine, einen Trockner oder eine Dunstabzugshaube, aufweisend einen elektrischen Antriebsmotor nach einer oder mehreren der beschriebenen und/oder dargestellten Ausführungsformen.

Konkrete Ausführungsbeispiele von erfindungsgemäßen Komponenten von elektrischen Antriebsmotoren sind in der nachfolgenden Beschreibung unter Bezugnahme auf die beigefügten Figuren näher erläutert. Bestimmte einzelne Merkmale dieser Ausführungsbeispiele können unabhängig davon, in welchem konkreten Zusammenhang sie erwähnt sind, gegebenenfalls auch einzeln oder in anderen als den dargestellten Kombinationen betrachtet, allgemeine Merkmale der Erfindung darstellen.

Es zeigen:
- Fig. 1: eine perspektivische Darstellung eines beispielhaften elektrischen Antriebsmotors einer Waschmaschine;
- Fig. 2: eine geschnittene perspektivische Darstellung eines erfindungsgemäßen Permanentmagnetenrotors mit einem Blechpaket und in Taschen des Blechpakets angeordneten Permanentmagneten;
- Fig. 3: eine geschnittene perspektivische Darstellung des Permanentmagnetenrotors gemäß Fig. 2 mit eingesetzten Permanentmagneten, die von Kunststoff umspritzt sind;
- Fig. 4: einen vergrößerten Ausschnitt des Permanentmagnetrotors gemäß Fig. 3 an einer beispielhaften Tasche im Bereich einer erfindungsgemäßen Federvorrichtung, die elastische Zungen umfasst;
- Fig. 5: eine perspektivische Darstellung des Permanentmagnetenrotors gemäß Fig. 2 und Fig. 3 mit dem Blechpaket, das die Taschen bildet, in welche die Permanentmagneten eingesetzt sind;
- Fig. 6: eine unten angeordnete Draufsicht auf die Gestalt eines Einzelbleches aus der Gruppe der ersten Anzahl von Einzelblechen des Blechpakets, das erfindungsgemäße Zungen aufweist und eine oben angeordnete Draufsicht auf die Gestalt eines Einzelbleches aus der Gruppe der zweiten Anzahl von zungenlosen Einzelblechen;
- Fig. 7: einen unten dargestellten vergrößerten Ausschnitt einer ersten Variante eines Einzelbleches aus der Gruppe der ersten Anzahl von Einzelblechen des Blechpakets mit rechteckigen Zungen und einen oben dargestellten vergrößerten Ausschnitt einer zweiten Variante eines Einzelbleches aus der Gruppe der ersten Anzahl von Einzelblechen des Blechpakets mit trapezförmigen Zungen;
- Fig. 8: eine perspektivische Darstellung des Blechpakets des Permanentmagnetenrotors mit einer abwechselnden Gruppierung von wenigen Einzelblechen aus der Gruppe der ersten Anzahl von Einzelblechen mit Zungen, und vielen Einzelblechen aus der Gruppe der zweiten Anzahl von zungenlosen Einzelblechen, bei entnommenen Permanentmagneten; und
- Fig. 9: eine unten angeordnete Draufsicht auf die Gestalt eines randoffenen Einzelbleches aus der Gruppe der ersten Anzahl von randoffenen Einzelblechen des Blechpakets, das erfindungsgemäße Zungen aufweist und eine oben angeordnete Draufsicht auf die Gestalt eines randoffenen Einzelbleches aus der Gruppe der zweiten Anzahl von zungenlosen randoffenen Einzelblechen.

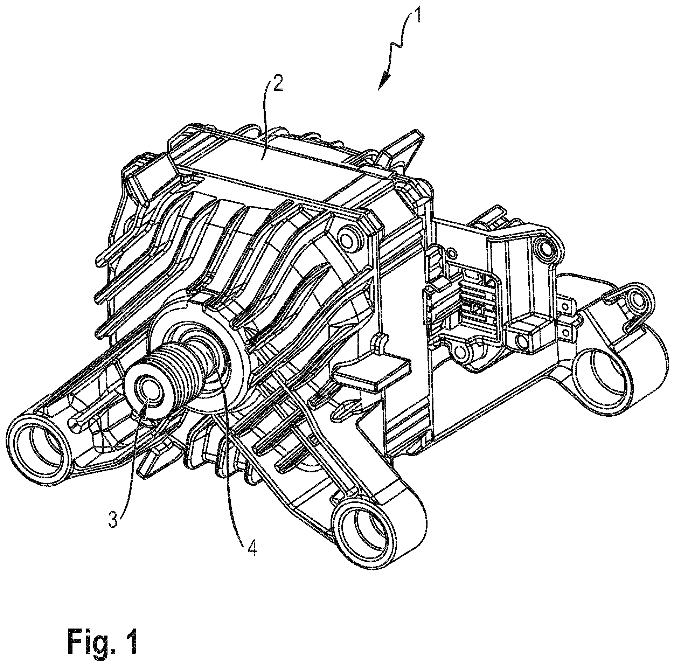

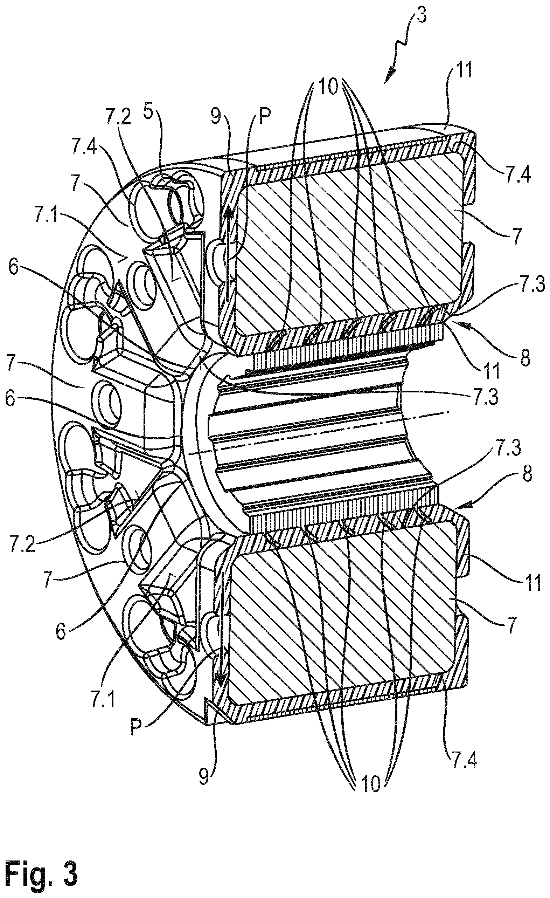

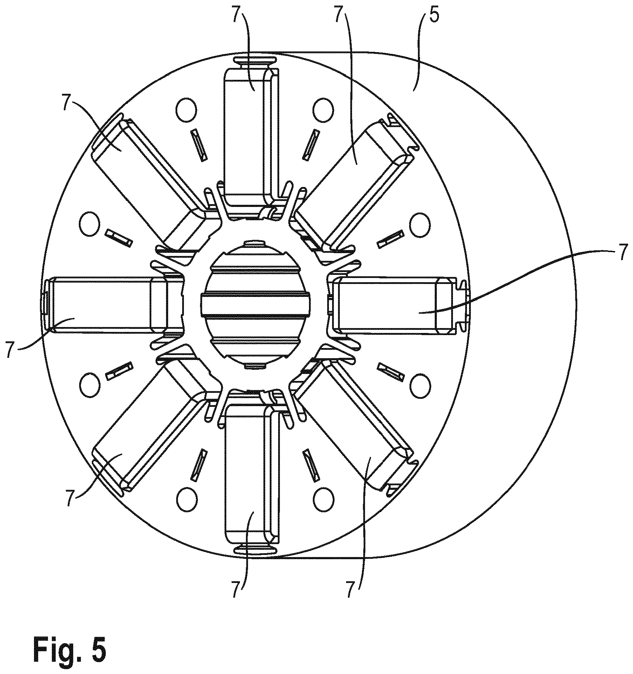

Die Fig. 1 bis Fig. 9 zeigen Bauteile eines beispielhaften elektrischen Antriebsmotors 1 einer beispielhaften Waschmaschine, aufweisend einen Stator 2 mit Polschuhen und wenigstens einer elektrisch ansteuerbaren Statorwicklung, und einen im Feld der Statorwicklung unter Belassen eines Ringspaltes drehantreibbar gelagerten Permanentmagnetenrotor 3, der eine Motorwelle 4 und ein auf der Motorwelle 4 sitzendes Blechpaket 5 aufweist, das zumindest eine der Anzahl von Polen des Permanentmagnetenrotors 3 entsprechende Anzahl von Taschen 6 aufweist, in denen jeweils einer der Permanentmagnete 7 eingesetzt ist.

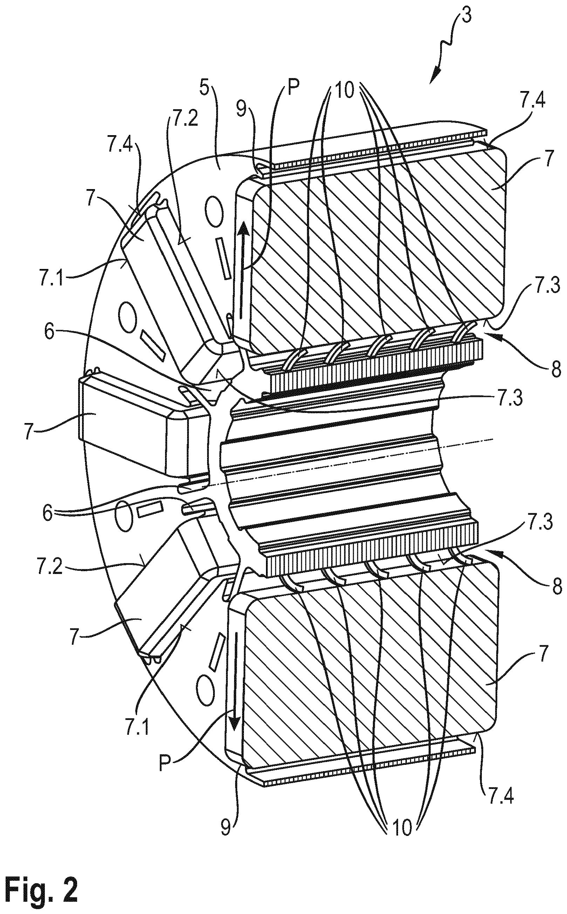

Der elektrische Antriebsmotor 1 weist im Falle des vorliegenden Ausführungsbeispiels einen feststehenden Außenstator und einen drehbar gelagerten Innenrotor auf. Der Permanentmagnetenrotor 3 weist mehrere Pole, insbesondere acht Pole auf. Jedem Permanentmagnet 7 des Permanentmagnetenrotors 3 ist eine Tasche 6 im Blechpaket 5 zugeordnet. In jeweils eine dieser Tasche 6 wird ein einzelner Permanentmagnet 7 eingesetzt und darin insbesondere gegen Verrutschen fixiert. Üblicherweise sind alle Permanentmagnete 7 des Permanentmagnetrotors 3 identisch ausgebildet. Jeder Permanentmagnet 7 kann wie dargestellt eine quaderförmige Gestalt aufweisen. Dabei können die beiden gegenüberliegenden größten Begrenzungsflächen des Permanentmagnets 7 in Umfangsrichtung ausgerichtet sein, wie insbesondere in Fig. 2 gezeigt, wobei umfangsseitige Begrenzungsflächen die Pole der Magneten bilden. Die Permanentmagnete 7 sind über den Umfang des Permanentmagnetenrotors 3 gleichmäßig verteilt angeordnet.

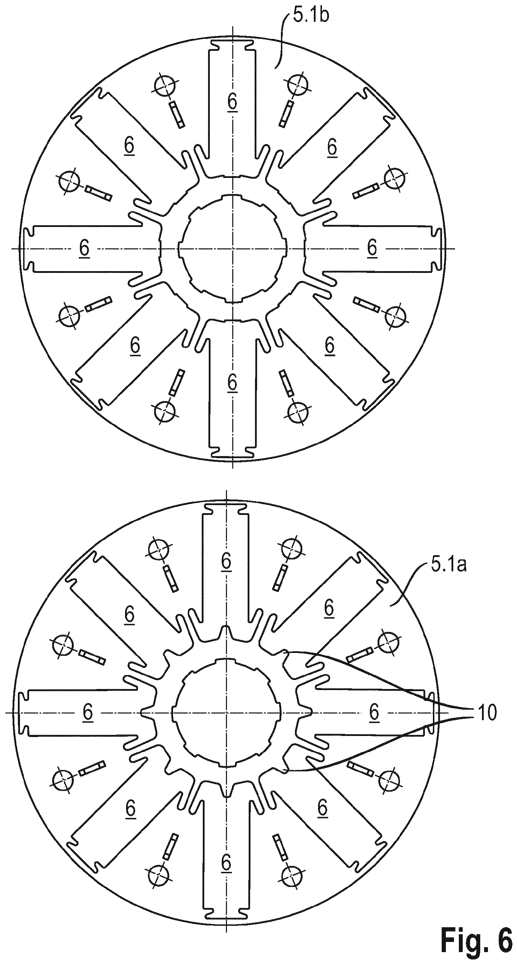

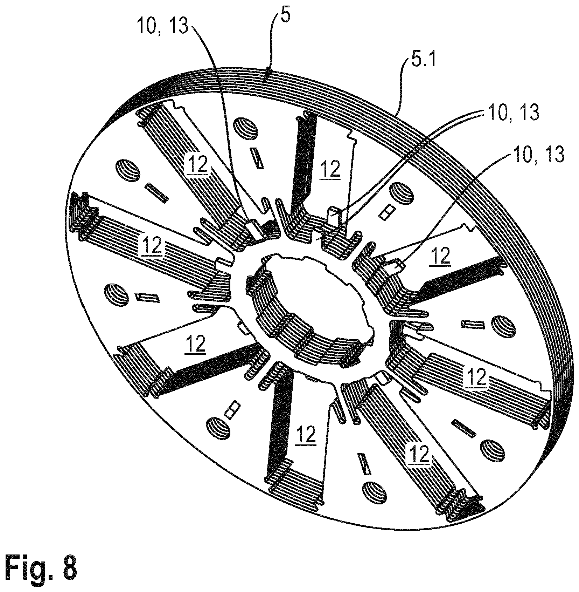

Jede Tasche 6 kann eine der Gestalt der Permanentmagnete 7 entsprechende Form aufweisen, wobei die Tasche 6 geringfügig größer ausgebildet ist, so dass jeweils ein einzelner Permanentmagnet 7 in eine Tasche 6 eingefügt werden kann, wie dies insbesondere in Fig. 2 dargestellt ist. Das Blechpaket 5 des Permanentmagnetenrotors 3 wird von mehreren, insbesondere gestanzten Blechzuschnitten gebildet, wie in Fig. 6 bis Fig. 9 gezeigt, welche deckungsgleich übereinander gestapelt (Fig. 8) und zu einem kompakten Paket miteinander verbunden sind. Das Blechpaket 5 kann insoweit durch Stanzpacketierung hergestellt sein. Die deckungsgleich übereinander gestapelten Einzelbleche 5.1 können beispielsweise durch Schweißen, Nieten, Klammern oder eben Stanz- bzw. Klebepacketierung verbunden sein.

Erfindungsgemäß weist der Permanentmagnetenrotor 3 eine Federvorrichtung 8 auf, die ausgebildet ist, die in die Taschen 6 eingesetzten Permanentmagnete 7 jeweils in radialen Richtungen nach außen vorgespannt, wie in Fig. 2 durch die Pfeile P angedeutet, innerhalb der Taschen 6 zu fixieren.

Die Permanentmagnete 7 weisen im Falle des vorliegenden Ausführungsbeispiels eine großflächige, im Wesentlichen rechteckige, in Umfangsrichtung, d.h. in Drehrichtung weisende vordere Begrenzungsfläche 7.1 auf und eine gegenüberliegende gleichgroße, im Wesentlichen rechteckige, in Umfangsrichtung, d.h. entgegen der Drehrichtung weisende hintere Begrenzungsfläche 7.2 auf. Eine innere schmale Begrenzungsfläche 7.3 weist auf die Roboterwelle zu und eine gegenüberliegende äußere schmale Begrenzungsfläche 7.4 bildet einen magnetischen Pol des Rotors. Alle Kanten des quaderförmigen Permanentmagnets 7 können mit einer Fase versehen sein bzw. abgerundet ausgebildet sein.

Die Federvorrichtung 8 kann prinzipiell aus einem Teil gebildet werden, aber auch aus mehreren Teilen gebildet werden. Die Federvorrichtung 8 spannt jeden einzelnen Permanentmagnet 7 innerhalb seiner jeweiligen Tasche 6 in eine radial möglichst weit außen liegende Position. Dabei kann der Permanentmagnetenrotor 3 an jeder Tasche 6 einen radial möglichst weit außen liegenden Anschlag 9 aufweisen, gegen den der jeweilige in seiner Tasche 6 eingesetzte Permanentmagnet 7 durch die Federvorrichtung 8 gedrückt wird. Alle Anschläge 9 liegen vorzugsweise auf demselben Durchmesser oder Radius, so dass sämtliche Permanentmagnete 7 durch die Federvorrichtung 8 auf denselben äußeren Durchmesser bzw. Radius positioniert werden. So kann sichergestellt werden, dass alle Permanentmagnete 7, d.h. alle Pole des Permanentmagnetenrotors 3 dieselbe magnetische Wirkung im Ringspalt des Antriebsmotors 1 erzeugen.

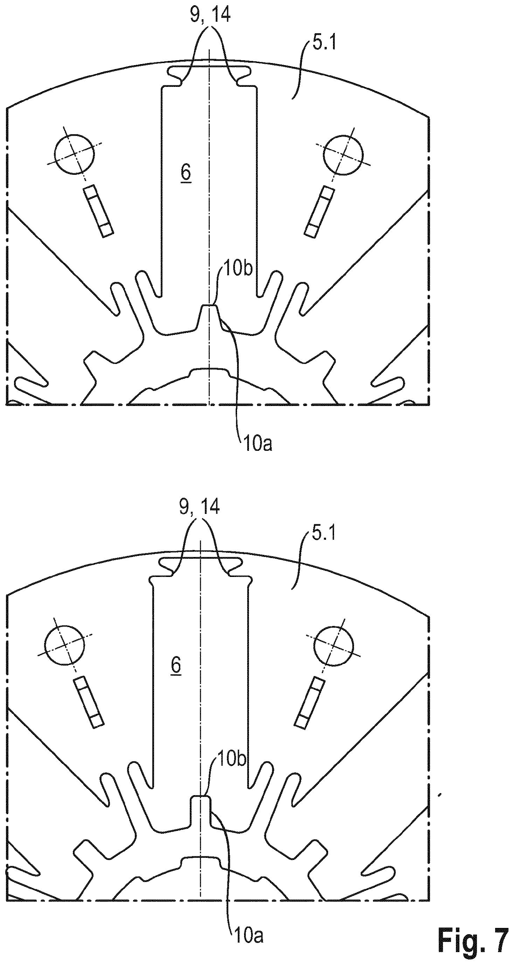

Die Federvorrichtung 8 kann wie im Falle des vorliegenden Ausführungsbeispiels von mehreren, beispielsweise gemäß Fig. 2 fünf elastischen Zungen 10 je Tasche 6 gebildet werden, die in die Taschen 6 hineinragen, wobei jede Zunge 10, wie insbesondere in Fig. 7 anhand zweier Ausführungsvarianten näher dargestellt ist, einen Zungengrundabschnitt 10a aufweist, der motorwellennahe an dem Blechpaket 5 festgelegt ist, ein Zungenspitzenabschnitt 10b in radialer Richtung von der Motorwelle 4 wegweisend in die Tasche 6 hineinragt und jede Tasche 6 motorwellenfern einen Anschlag 9 aufweist, der an dem Blechpaket 5 festgelegt ist und gegen die der jeweils in eine der Taschen 6 eingesetzte Permanentmagnet 7 durch die ein oder mehreren Zungen 10 der betreffenden Tasche 6 federvorgespannt angedrückt wird.

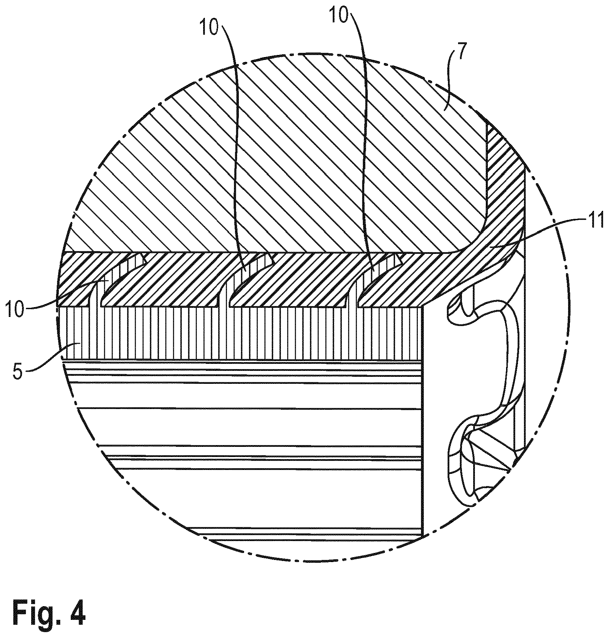

Die Federvorrichtung 8 bzw. die Zungen 10 stützen sich, wie insbesondere in Fig. 4 zu sehen ist, jeweils an den inneren schmalen Begrenzungsflächen 7.3 der Permanentmagnete 7 ab.

Erfindungsgemäß dient die Federvorrichtung 8 bzw. dienen die Zungen 10 dazu, die in die Taschen 6 eingesetzten Permanentmagnete 7 während der Fertigung und/oder der Montage des Permanentmagnetenrotors 3 vorübergehend zu fixieren, bis die in die Taschen 6 eingesetzten Permanentmagneten 7 durch ein Umspritzen des Blechpakets 5 mit Kunststoff 11 durch den eingespritzten Kunststoff 11 endgültig in ihren Positionen fixiert werden, wie dies in Fig. 4 aufgezeigt ist. Eine solche nur vorübergehende Fixierung der in die Taschen 6 eingesetzten Permanentmagnete 7 durch die Federvorrichtung 8 bzw. durch die Zungen 10 verhindert, dass die Permanentmagnete 7 in den Taschen 6 verschoben werden oder sogar ganz herausfallen, wenn der Permanentmagnetenrotor 3, insbesondere das Blechpaket 5 während der Fertigung gehandhabt oder bewegt wird oder vor dem Umspritzen mit Kunststoff 11 vorerwärmt wird, bevor der noch nicht umspritzte Permanentmagnetenrotor 3 in eine Spritzgießform eingesetzt wird. Auch kann die Federvorrichtung 8 verhindern bzw. können die Zungen 10 verhindern, dass die in die Taschen 6 eingesetzten Permanentmagnete 7 während des Umspritzvorgangs durch den flüssigen Kunststoffstrom verschoben werden. Die federvorspannende Wirkung der Federvorrichtung 8 bzw. der Zungen 10 kann also gegebenenfalls nach einem Umspritzen mit Kunststoff 11 wegfallen, da die federvorspannende Wirkung in diesen Fällen gegebenenfalls nicht mehr benötigt wird.

Das Blechpaket 5 des Permanentmagnetenrotors 3 wird, wie in Fig. 8 gezeigt, aus einem Stapel von mehreren Einzelblechen 5.1 gebildet, welche eine der Anzahl von Polen des Permanentmagnetenrotors 3 entsprechende Anzahl von Fensterausschnitten 12 aufweist, welche im gestapelten Zustand des Blechpaketes 5 die Taschen 6 bilden, in welchen die Permanentmagnete 7 eingesetzt sind. Die Federvorrichtung 8, insbesondere die Zungen 10, werden durch nach innen vorspringende Randabschnitte 13 der Fensterausschnitte 12 der Einzelbleche 5.1 des Blechpakets 5 gebildet.

Die Zungen 10 können sich somit zumindest im Wesentlichen ausgehend von den motorwellennahen Begrenzungsflächen der Taschen 6 in Richtung radial nach außen erstrecken. Anders ausgedrückt ragen die Zungen 10 ausgehend von den motorwellennahen Begrenzungsflächen der Taschen 6 radial in die Taschen 6 hinein, wie insbesondere in Fig. 7 bis Fig. 9 gezeigt. Wenn die Permanentmagnete 7 noch nicht in die Taschen 6 eingesetzt sind, sind die Zungen 10 entspannt, d.h. es ist noch keine Federkraft in ihnen gespeichert, wie beispielsweise in Fig. 8 zu sehen ist. Werden nun die Permanentmagnete 7 in axialer Richtung, d.h. in einer parallelen Richtung zur Motorwelle 4, in die Taschen 6 eingeschoben oder eingesteckt, dann drücken die Permanentmagnete 7 die Zungen 10 zur Seite, d.h. die Zungen 10 biegen sich, wie insbesondere in Fig. 2 bis Fig. 5 dargestellt ist, um den Permanentmagneten 7 auszuweichen und eine Federkraft wird in den Zungen 10 gespeichert. Sind die Permanentmagnete 7 vollständig in die Taschen 6 eingeschoben oder eingesteckt, dann liegen die Zungenspitzenabschnitte 10b der Zungen 10 an den motorwellennahen schmalen Begrenzungsflächen 7.3 der Permanentmagnete 7 elastisch vorgespannt an und drücken somit die Permanentmagnete 7 radial nach außen. In jeder Tasche 6 können ein oder mehrere Zungen 10 vorgesehen sein, beispielsweise wie in Fig. 2 dargestellt, fünf Zungen 10 je Tasche 6.

Wie in Fig. 7 oben dargestellt, können die ein oder mehreren Zungen 10 jeweils eine trapezförmige Kontur aufweisen, wobei der Zungengrundabschnitt 10a durch die längere Basis der trapezförmigen Zunge 10 gebildet wird und der Zungenspitzenabschnitt 10b durch die kürzere Basis der trapezförmigen Zunge 10 gebildet wird.

Alternativ können die ein oder mehreren Zungen 10, wie in Fig. 7 unten dargestellt, jeweils eine rechteckige Kontur aufweisen.

Wie insbesondere in Fig. 8 aufgezeigt ist, kann der Stapel von Einzelblechen 5.1 aus einer ersten Anzahl von Einzelblechen 5.1a gebildet werden, welche die Zungen 10 aufweisen und aus einer zweiten Anzahl von Einzelblechen 5.1b gebildet wird, welche zungenlos ausgebildet sind, wobei die erste Anzahl von Einzelblechen 5.1a und die zweite Anzahl von Einzelblechen 5.1b zur Bildung des Stapels des Blechpakets 5 in einer vorgegebenen, sich abwechselnden Gruppierung übereinanderliegend angeordnet sind.

Die zweite Anzahl von Einzelblechen 5.1b kann um das achtfache bis zwölffache größer sein, als die erste Anzahl von Einzelblechen 5.1a.

Jede Tasche 6 des Blechpakets 5 weist motorwellenfern einen Anschlag 9 auf, der von Anschlagskanten der Einzelbleche 5.1 des Blechpakets 5 gebildet werden, die durch nach innen vorspringende Nasen 14 an den seitlichen Randabschnitten der Fensterausschnitte 12 der Einzelbleche 5.1 des Blechpakets 5 gebildet werden, welche im gestapelten Zustand des Blechpakets 5 die Taschen 6 bilden.

Wie in der Ausführungsvariante der Fig. 6 und Fig. 7 gezeigt, kann das Blechpaket 5 des Permanentmagnetenrotors 3 aus einem Stapel von mehreren Einzelblechen 5.1 gebildet werden, welche eine der Anzahl von Polen des Permanentmagnetenrotors 3 entsprechende Anzahl von Fensterausschnitten 12 aufweist, welche im gestapelten Zustand des Blechpakets 5 die Taschen 6 bilden, wobei die Fensterausschnitte 12 eine geschlossene Kontur aufweisen.

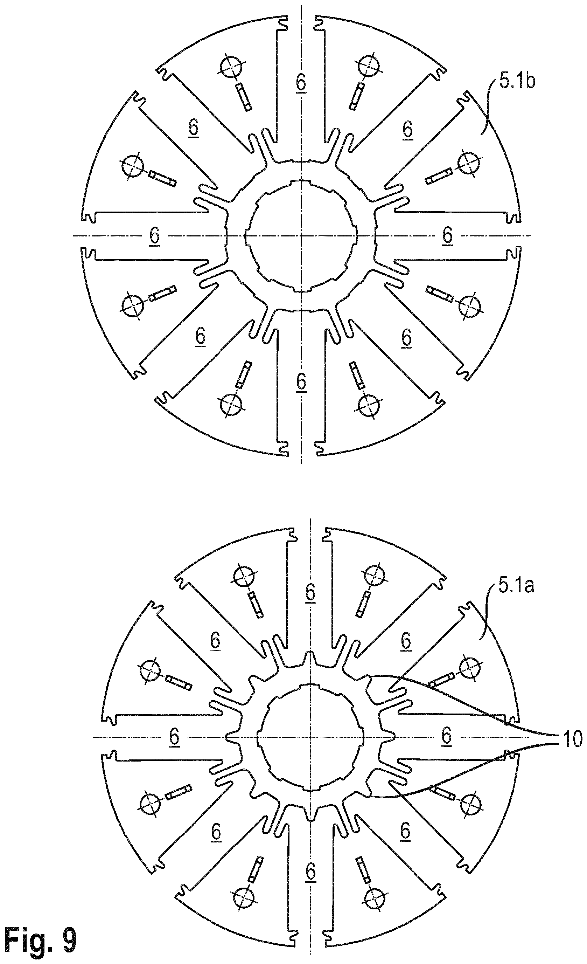

Wie in der Ausführungsvariante der Fig. 9 gezeigt, kann das Blechpaket 5 des Permanentmagnetenrotors 3 aus einem Stapel von mehreren Einzelblechen 5.1 gebildet werden, welche eine der Anzahl von Polen des Permanentmagnetenrotors 3 entsprechende Anzahl von Fensterausschnitten 12 aufweist, welche im gestapelten Zustand des Blechpakets 5 die Taschen 6 bilden, wobei die Fensterausschnitte 12 eine am motorwellenfernen Randabschnitt randoffene Kontur aufweisen.

### Bezugszeichenliste

- 1: elektrischer Antriebsmotor
- 2: Stator
- 3: Permanentmagnetenrotor
- 4: Motorwelle
- 5: Blechpaket
- 5.1: Einzelbleche
- 6: Taschen
- 7: Permanentmagnete
- 7.1: vordere Begrenzungsfläche
- 7.2: hintere Begrenzungsfläche
- 7.3: innere schmale Begrenzungsfläche
- 8: Federvorrichtung
- 9: Anschlag
- 10: Zungen
- 11: Kunststoff
- 12: Fensterausschnitte
- 13: nach innen vorspringende Randabschnitte
- 14: Nase

## Patentansprüche

1. Elektrischer Antriebsmotor, aufweisend einen Stator (2) mit Polschuhen und wenigstens einer elektrisch ansteuerbaren Statorwicklung, und einen im Feld der Statorwicklung unter Belassen eines Ringspaltes drehantreibbar gelagerten Permanentmagnetenrotor (3), der eine Motorwelle (4) und ein auf der Motorwelle (4) sitzendes Blechpaket (5) aufweist, das zumindest eine der Anzahl von Polen des Permanentmagnetenrotors (3) entsprechende Anzahl von Taschen (6) aufweist, in denen jeweils einer der Permanentmagnete (7) eingesetzt ist, und aufweisend eine Federvorrichtung (8), die ausgebildet ist, die in die Taschen (6) eingesetzten Permanentmagnete (7) jeweils in radialen Richtungen nach außen vorgespannt innerhalb der Taschen (6) zu fixieren,
wobei das Blechpaket (5) des Permanentmagnetenrotors (3) aus einem Stapel von mehreren Einzelblechen (5.1) gebildet wird, welche eine der Anzahl von Polen des Permanentmagnetenrotors (3) entsprechende Anzahl von Fensterausschnitten (12) aufweist, welche im gestapelten Zustand des Blechpaketes (5) die Taschen (6) bilden, in welchen die Permanentmagnete (7) eingesetzt sind,
wobei die Federvorrichtung (8) durch an einem geschlossenen motorwellennahen Ring nach innen vorspringende umbiegbare Randabschnitte der Fensterausschnitte (12) der Einzelbleche (5.1) des Blechpakets (5) gebildet werden,
wobei jede Tasche (6) des Blechpakets (5) motorwellenfern eine Anschlagvorrichtung (9) aufweist, die von Anschlagskanten der Einzelbleche (5.1) des Blechpakets (5) gebildet werden, die durch nach innen vorspringende Nasen (14) an den seitlichen Randabschnitten von Fensterausschnitten (12) der Einzelbleche (5.1) des Blechpakets (5) gebildet werden, welche im gestapelten Zustand des Blechpakets (5) die Taschen (6) bilden,
**dadurch gekennzeichnet, dass** die in die Taschen (6) des Blechpakets (5) eingesetzten und von der Federvorrichtung (8) vorgespannt fixierten Permanentmagnete (7) von der Federvorrichtung (8) nur vorübergehend fixiert werden, und dass sie durch Kunststoff (11) umspritzt sind.

2. Elektrischer Antriebsmotor nach Anspruch 1, **dadurch gekennzeichnet, dass** die Federvorrichtung (8) von jeweils ein oder mehreren, in jeweils eine der Taschen (6) hineinragenden elastischen Zungen (10) gebildet wird, wobei jede Zunge (10) einen Zungengrundabschnitt (10a) aufweist, der motorwellennahe an dem Blechpaket (5) festgelegt ist, ein Zungenspitzenabschnitt (10b) in radialer Richtung von der Motorwelle (4) weg weisend in die Tasche (6) hineinragt, und wobeider jeweils in eine der Taschen (6) eingesetzte Permanentmagnet (7) durch die ein oder mehreren Zungen (10) der betreffenden Tasche (6) gegen die Anschlagvorrichtung (9) der jeweiligen Tasche federvorgespannt angedrückt wird.

3. Elektrischer Antriebsmotor nach Anspruch 1 oder 2, **dadurch gekennzeichnet, dass** die ein oder mehreren Zungen (10) jeweils eine trapezförmige Kontur aufweisen, wobei der Zungengrundabschnitt (10a) durch die längere Basis der trapezförmigen Zunge (10) gebildet wird und der Zungenspitzenabschnitt (10b) durch die kürzere Basis der trapezförmigen Zunge (10) gebildet wird.

4. Elektrischer Antriebsmotor nach einem der Ansprüche 1 bis 3, **dadurch gekennzeichnet, dass** die ein oder mehreren Zungen (10) jeweils eine rechteckige Kontur aufweisen.

5. Elektrischer Antriebsmotor nach einem der Ansprüche 1 bis 4, **dadurch gekennzeichnet, dass** der Stapel von Einzelblechen (5.1) aus einer ersten Anzahl von Einzelblechen (5.1a) gebildet wird, welche die Zungen (10) aufweisen und aus einer zweiten Anzahl von Einzelblechen (5.1b) gebildet wird, welche zungenlos ausgebildet sind, wobei die erste Anzahl von Einzelblechen (5.1a) und die zweite Anzahl von Einzelblechen (5.1b) zur Bildung des Stapels des Blechpakets (5) in einer vorgegebenen, sich abwechselnden Gruppierung übereinanderliegend angeordnet sind.

6. Elektrischer Antriebsmotor nach Anspruch 5, **dadurch gekennzeichnet, dass** die zweite Anzahl von Einzelblechen (5.1b) um das achtfache bis zwölffache größer ist, als die erste Anzahl von Einzelblechen (5.1a).

7. Elektrischer Antriebsmotor nach einem der Ansprüche 1 bis 6, **dadurch gekennzeichnet, dass** die Fensterausschnitte (12) eine geschlossene Kontur aufweisen.

8. Elektrischer Antriebsmotor nach einem der Ansprüche 1 bis 6, **dadurch gekennzeichnet, dass** die Fensterausschnitte (12) eine am motorwellenfernen Randabschnitt randoffene Kontur aufweisen.

9. Haushaltsgerät, insbesondere Geschirrspülmaschine, Waschmaschine, Trockner oder Dunstabzugshaube, aufweisend einen elektrischen Antriebsmotor (1) nach einem der Ansprüche 1 bis 8.

## Claims

1. Electric drive motor, having a stator (2) with pole shoes and at least one electrically actuatable stator winding and a permanent magnet rotor (3) mounted in the field of the stator winding leaving an annular gap such that said permanent magnet rotor is capable of being driven in a rotational manner, which permanent magnet rotor has a motor shaft (4) and a laminated core (5) seated on the motor shaft (4), which laminated core has a number of pockets (6) corresponding to the number of poles of the permanent magnet rotor (3), in each of which pockets one of the permanent magnets (7) is inserted, and having a spring apparatus (8) which is designed to fix each of the permanent magnets (7) inserted in the pockets (6) in radial directions to the outside in a pretensioned manner within the pockets (6),
wherein the laminated core (5) of the permanent magnet rotor (3) is formed from a stack of a plurality of individual laminations (5.1), which has a number of window cut-outs (12) which corresponds to the number of poles of the permanent magnet rotor (3), which, in the stacked state of the laminated core (5), form the pockets (6), into which the permanent magnets (7) are inserted,
wherein the spring apparatus (8) is formed by edge sections of the window cut-outs (12) of the individual laminations (5.1) of the laminated core (5), which edge sections can be bent so as to project to the inside on a closed ring close to the motor shaft, wherein each pocket (6) of the laminated core (5) has a stop apparatus (9) away from the motor shaft, which stop apparatus is formed by stop edges of the individual laminations (5.1) of the laminated core (5), which are formed by lugs (14) projecting to the inside on the side edge sections of window cut-outs (12) of the individual laminations (5.1) of the laminated core (5), which, in the stacked state of the laminated core (5), form the pockets (6),
**characterised in that**
the permanent magnets (7) that are inserted into the pockets (6) of the laminated core (5) and are fixed pretensioned manner by the spring apparatus (8) are only temporarily fixed by the spring apparatus (8), and that they are injection moulded by way of plastic (11).

2. Electric drive motor according to claim 1, **characterised in that** the spring apparatus (8) is formed in each case from one or more elastic tongues (10) which protrude into one of the pockets (6) in each case, wherein each tongue (10) has a tongue base section (10a) which is defined on the laminated core (5) close to the motor shaft, a tongue tip section (10b) which protrudes into the pocket (6) in the radial direction pointing away from the motor shaft (4), and wherein the permanent magnet (7) inserted in each case into one of the pockets (6) is pressed against the stop apparatus (9) of the respective pocket in a spring-pretensioned manner by the one or more tongues (10) of the relevant pocket (6).

3. Electric drive motor according to claim 1 or 2, **characterised in that** the one or more tongues (10) each have a trapezoidal contour, wherein the tongue base section (10a) is formed by the longer base of the trapezoidal tongue (10) and the tongue tip section (10b) is formed by the shorter base of the trapezoidal tongue (10).

4. Electric drive motor according to one of claims 1 to 3, **characterised in that** the one or more tongues (10) each have a rectangular contour.

5. Electric drive motor according to one of claims 1 to 4, **characterised in that** the stack of individual laminations (5.1) is formed from a first number of individual laminations (5.1a), which have the tongues (10) and are formed from a second number of individual laminations (5.1b), which are formed without tongues, wherein the first number of individual laminations (5.1a) and the second number of individual laminations (5.1b) are arranged in an overlapping manner in a predefined, alternating grouping so as to form the stack of the laminated core (5).

6. Electric drive motor according to claim 5, **characterised in that** the second number of individual laminations (5.1b) is eight to twelve times larger than the first number of individual laminations (5.1a).

7. Electric drive motor according to one of claims 1 to 6, **characterised in that** the window cut-outs (12) have a closed contour.

8. Electric drive motor according to one of claims 1 to 6, **characterised in that** the window cut-outs (12) have a contour which is open to the edge at the edge section which is away from the motor shaft.

9. Household appliance, in particular dishwasher, washing machine, dryer or extractor hood, having an electric drive motor (1) according to one of claims 1 to 8.

## Revendications

1. Moteur d'entraînement électrique, présentant un stator (2) comportant des pièces polaires et au moins un enroulement de stator excitable électriquement, et un rotor à aimants permanents (3) logé de façon à pouvoir être entraîné en rotation dans le champ de l'enroulement de stator en ménageant un interstice annulaire, lequel présente un arbre de moteur (4) et un empilement de tôles (5) placé sur l'arbre de moteur (4), qui présente au moins un nombre de poches (6) correspondant au nombre de pôles du rotor à aimants permanents (3), dans lesquelles un des aimants permanents (7) est respectivement inséré, et présentant un dispositif de ressort (8), qui est configuré pour fixer les aimants permanents (7) insérés dans les poches (6) respectivement à l'état précontraint vers l'extérieur dans des directions radiales à l'intérieur des poches (6),
dans lequel l'empilement de tôles (5) du rotor à aimants permanents (3) est formé d'un empilement de plusieurs tôles individuelles (5.1), qui présentent un nombre d'échancrures de fenêtre (12) correspondant au nombre de pôles du rotor à aimants permanents (3), qui forment, à l'état empilé de l'empilement de tôles (5), les poches (6) dans lesquelles les aimants permanents (7) sont insérés,
dans lequel, le dispositif de ressort (8) est formé par des sections de bord pouvant être repliées, saillant vers l'intérieur au niveau d'un anneau fermé proche de l'arbre de moteur, des échancrures de fenêtre (12) des tôles individuelles (5.1) de l'empilement de tôles (5),
dans lequel chaque poche (6) de l'empilement de tôles (5) présente, à une position éloignée de l'arbre de moteur, un dispositif de butée (9), qui sont formés par des bords d'arrêt des tôles individuelles (5.1) de l'empilement de tôles (5), qui sont formés à leur tour par des becs saillant vers l'intérieur (14) au niveau des sections de bord latérales des échancrures de fenêtre (12) des tôles individuelles (5.1) de l'empilement de tôles (5), qui forment les poches (6) à l'état empilé de l'empilement de tôles (5), **caractérisé en ce que** les aimants permanents (7) insérés dans les poches (6) de l'empilement de tôles (5) et fixés de façon précontrainte par le dispositif de ressort (8) sont fixés par le dispositif de ressort (8) uniquement temporairement et **en ce qu'**ils sont enrobés par injection de matière plastique (11).

2. Moteur d'entraînement électrique selon la revendication 1, **caractérisé en ce que** le dispositif de ressort (8) est formé respectivement par une ou plusieurs languettes élastiques (10) faisant saillie respectivement dans une des poches (6),
dans lequel chaque languette (10) présente une section de base de languette (10a), qui est définie au niveau de l'empilement de tôles (5) à côté de l'arbre de moteur, et une section de sommet de languette (10b) faisant saillie en direction radiale dans la poche (6) en s'éloignant de l'arbre de moteur (4), et où un aimant permanent (7) inséré respectivement dans une des poches (6) est pressé de façon précontrainte par ressort contre le dispositif de butée (9) de la poche respective par l'une ou plusieurs languettes (10) de la poche concernée (6).

3. Moteur d'entraînement électrique selon la revendication 1 ou 2, **caractérisé en ce que** l'une ou plusieurs languettes (10) présentent chacune un contour trapézoïdal, dans lequel la section de base de languette (10a) est formée par la grande base de la languette trapézoïdale (10) et la section de sommet de languette (10b) est formée par la petite base de la languette trapézoïdale (10).

4. Moteur d'entraînement électrique selon l'une des revendications 1 à 3, **caractérisé en ce que** l'une ou plusieurs languettes (10) présentent chacune un contour rectangulaire.

5. Moteur d'entraînement électrique selon l'une des revendications 1 à 4, **caractérisé en ce que** l'empilement de tôles individuelles (5.1) est formé par un premier nombre de tôles individuelles (5.1a), qui présentent les languettes (10) et un deuxième nombre de tôles individuelles (5.1b), qui sont formées sans languette, dans lequel le premier nombre de tôles individuelles (5.1a) et le deuxième nombre de tôles individuelles (5.1b) sont agencées l'une au-dessus de l'autre dans un groupement alterné prédéfini pour former l'empilement de tôles (5).

6. Moteur d'entraînement électrique selon la revendication 5, **caractérisé en ce que** le deuxième nombre de tôles individuelles (5.1b) est supérieur de huit à douze fois au premier nombre de tôles individuelles (5.1a).

7. Moteur d'entraînement électrique selon l'une des revendications 1 à 6, **caractérisé en ce que** les échancrures de fenêtre (12) présentent un contour fermé.

8. Moteur d'entraînement électrique selon l'une des revendications 1 à 6, **caractérisé en ce que** les échancrures de fenêtre (12) présentent un contour ouvert au niveau du bord au niveau de la section de bord éloignée de l'arbre de moteur.

9. Appareil électroménager, en particulier lave-vaisselle, lave-linge, sèche-linge ou hotte aspirante, présentant un moteur d'entraînement électrique (1) selon l'une des revendications 1 à 8.
